(19) **Europäisches Patentamt / European Patent Office / Office européen des brevets**

(11) **EP 2 872 956 B1**

(12) **FASCICULE DE BREVET EUROPEEN**

(45) Date de publication et mention
de la délivrance du brevet:
**12.10.2016 Bulletin 2016/41**

(21) Numéro de dépôt: **13744684.5**

(22) Date de dépôt: **03.07.2013**

(51) Int Cl.:
***G05B 23/02*** *(2006.01)*

(86) Numéro de dépôt international:
**PCT/FR2013/051573**

(87) Numéro de publication internationale:
**WO 2014/009634 (16.01.2014 Gazette 2014/03)**

(54) **MÉTHODE DE DÉTECTION D'UNE DÉGRADATION D'UNE TURBOMACHINE PAR SURVEILLANCE DES PERFORMANCES DE LADITE TURBOMACHINE**

VERFAHREN ZUM FESTSTELLEN DER VERSCHLECHTERUNG EINER TURBOMASCHINE DURCH ÜBERWACHUNG DER LEISTUNG DIESER TURBOMASCHINE

METHOD FOR DETECTING DETERIORATION IN A TURBOMACHINE BY MONITORING THE PERFORMANCE OF SAID TURBOMACHINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.07.2012 FR 1256640**

(43) Date de publication de la demande:
**20.05.2015 Bulletin 2015/21**

(73) Titulaire: **Safran Aircraft Engines**
**75015 Paris (FR)**

(72) Inventeurs:
- **PIOL, Olivier**
  **F-77550 Moissy-Cramayel Cedex (FR)**
- **BRICHLER, Thierry**
  **F-77550 Moissy-Cramayel Cedex (FR)**
- **OLIVIER, Amaury**
  **F-77550 Moissy-Cramayel Cedex (FR)**

(74) Mandataire: **Gevers & Orès**
**9 rue St Antoine du T**
**31000 Toulouse (FR)**

(56) Documents cités:
**EP-A2- 2 207 072     US-A1- 2003 074 171**

EP 2 872 956 B1

**Description**

## DOMAINE TECHNIQUE GENERAL ET ART ANTERIEUR

L'invention concerne le domaine des turbomachines, en particulier, les turboréacteurs d'aéronef.

Un turboréacteur comporte de manière classique plusieurs modules tels qu'un compresseur, une chambre de combustion et une turbine. Au cours de son fonctionnement, ces modules vont se dégrader affectant ainsi les performances d'un ou de plusieurs modules du turboréacteur. En cas de forte dégradation, le turboréacteur et l'aéronef peuvent subir un dysfonctionnement en vol connu de l'homme du métier sous la désignation de IFSD (In Flight Shut Down) entraînant une dépose du turboréacteur non-planifiée pour opération maintenance. Ces dégradations sont généralement liées à des phénomènes d'encrassement, de corrosion, d'oxydation, d'érosion, d'abrasion ou bien d'ingestion de corps étranger, etc.

Pour prévenir l'apparition de dégradations importantes, des opérations de contrôle du turboréacteur sont programmées à intervalles de temps réguliers. On peut ainsi détecter si un des modules du turboréacteur est défectueux ou présente des symptômes annonçant un dysfonctionnement futur. Une telle méthode de détection n'est pas satisfaisante car l'usure des turboréacteurs d'une même famille est variable, un contrôle à intervalles de temps réguliers n'étant pas adéquat. En effet, si la fréquence des contrôles est trop faible, on augmente le risque de dysfonctionnement en vol (IFSD). Au contraire, si la fréquence des contrôles est trop élevée, on peut réaliser une étape de contrôle alors que le moteur est en parfaite santé ce qui résulte en une perte de temps.

Afin d'éliminer cet inconvénient, il a été proposé de suivre continûment, c'est-à-dire pour chaque cycle de vol de l'aéronef, les performances individuelles d'un turboréacteur afin de détecter de manière anticipée l'apparition de dégradations anormales du turboréacteur.

On connaît dans l'art antérieur une méthode de détection de dégradation pour un turboréacteur dans laquelle on utilise une base de données de signatures de dégradation connues qui ont été identifiées tout au long de la vie de turboréacteurs appartenant à la même famille. Pour former une signature, on mesure des paramètres physiques de la turbomachine, par exemple, le débit du carburant, le régime du turboréacteur et la température en sortie du moteur. En pratique, les paramètres mesurés par une turbomachine son peu nombreux (débit carburant, régime du corps haute pression et température qui correspond à la température des gaz à l'échappement) pour assurer la surveillance des différents modules de la turbomachine. Par conséquent, il est difficile de pouvoir cibler de manière précise le ou les modules à l'origine de la dégradation anormale niveau de performance du turboréacteur comme décrit dand le document EP 2 207 072 A2.

On connaît par la demande FR 1151348 de la société SNECMA une méthode utilisant un modèle théorique du cycle thermodynamique de ladite turbomachine afin de disposer d'un grand nombre de signatures de dégradation. En pratique, pour un nombre d'entrées limité du modèle, on peut aboutir à plusieurs configurations thermodynamiques différentes. La sous-détermination du problème à résoudre ne permet pas de détecter de manière optimale l'état des modules de la turbomachine.

Par ailleurs, les méthodes de détection selon l'art antérieur ne prennent pas en compte le vieillissement d'une turbomachine. Il en résulte que la méthode de détection peut conclure à une dégradation anormale d'un des modules de la turbomachine alors que la turbomachine a uniquement vieilli.

Il existe un besoin pour une méthode de détection de dégradation qui distingue une détérioration liée au vieillissement nominal d'une turbomachine et une détérioration liée à une dégradation anormale d'un élément.

## PRESENTATION GENERALE DE L'INVENTION

A cet effet, l'invention concerne une méthode de détection d'une dégradation d'une turbomachine, au moyen d'un calculateur, par surveillance des performances de ladite turbomachine, la turbomachine comportant une pluralité de modules fonctionnels, chaque module fonctionnel étant caractérisé par au moins un paramètre de santé représentatif d'une dégradation du module fonctionnel de la turbomachine, le vieillissement global de la turbomachine étant caractérisé par un paramètre de vieillissement, méthode dans laquelle :

- on mesure une pluralité de paramètres physiques de la turbomachine pour former un indice de performance courant de la turbomachine ;
- on calcule une pluralité d'indices de performance dégradée de la turbomachine au moyen d'un modèle thermodynamique de la turbomachine en supposant pour chaque indice de performance dégradée qu'uniquement un seul module fonctionnel de la turbomachine est dégradé, chaque indice de performance dégradée étant associé à un module fonctionnel ;

- chaque indice de performance dégradée, correspondant à un unique module fonctionnel dégradé parmi l'ensemble des modules fonctionnels de la turbomachine, est obtenu par simulation d'un indice de performance de la turbomachine pour lequel le paramètre de santé du module fonctionnel dégradé et le paramètre de vieillissement sont des variables, les paramètres de santé des autres modules fonctionnels non dégradés étant estimés comme des paramètres de santé sains ;

- on calcule une pluralité d'indices de coût, chaque indice de coût correspondant à l'écart entre l'indice de performance courant et un indice de performance dégradée en faisant varier les variables de l'indice de performance dégradée de manière à ce que l'écart soit minimal, chaque indice de performance dégradée étant associé à son indice de coût ;
- on détermine l'indice de coût optimal correspondant à celui de plus faible valeur parmi l'ensemble des indices de coût ;
- on détecte une dégradation du module de la turbomachine dont l'indice de performance dégradée est associé à l'indice de coût optimal.

La méthode selon l'invention permet avantageusement de tenir compte du vieillissement de la turbomachine ce qui permet de distinguer avantageusement une perte de performance liée au vieillissement de la turbomachine d'une dégradation anormale. Comme on limite le nombre de variables en supposant qu'uniquement un seul module est endommagé, la décision de dégradation est prise de manière rapide et fiable. Le problème à résoudre n'est plus sous-déterminé comme cela était le cas dans l'art antérieur. L'utilisation d'indices de coût permet de valider de manière rapide et fiable les hypothèses réalisées sur la dégradation de la turbomachine.

De préférence, chaque module fonctionnel est caractérisé par au moins deux paramètres de santé. De manière préférée, chaque module fonctionnel est caractérisé par un indicateur de dégradation de rendement et un indicateur de dégradation de capacité de débit/perméabilité. Les indicateurs de rendement et de capacité de débit/perméabilité permettent de caractériser de manière précise un module d'une turbomachine, en particulier, le type de dégradation du module. En effet, après détection du module dégradé, on peut analyser les paramètres de santé optimisés pour déterminer la nature de la dégradation ce qui permet de réaliser une maintenance ciblée.

De préférence encore, les modules fonctionnels appartiennent aux modules fonctionnels suivants : un module de soufflante, un module de compresseur haute pression, un module de booster, un module de turbine haute pression et un module de turbine basse pression. De tels modules présentent rarement des dégradations anormales de manière simultanée ce qui permet de valider les hypothèses de dégradation des indices de performance dégradée.

Selon un aspect de l'invention, on compare l'indice de coût optimal à un seuil de coût de valeur prédéterminée et on inhibe la détection de la dégradation si l'indice de coût optimal est inférieur au seuil de coût. De manière avantageuse, on limite le risque de fausse détection en réglant la sensibilité de la détection. Plus l'indice de coût est faible, plus la dégradation est vraisemblable.

De préférence, on détermine un indice de coût candidat correspondant à celui de plus faible valeur parmi l'ensemble des indices de coût outre l'indice de coût optimal, on compare la différence entre l'indice de coût candidat et l'indice de coût optimal à un seuil de garde déterminé et on détecte une dégradation du module de la turbomachine dont l'indice de performance dégradée est associé à l'indice de coût candidat si la différence est inférieure au seuil de garde déterminé. En cas d'indécision, le procédé détermine avantageusement les deux modules les plus susceptibles d'être à l'origine de la dégradation ce qui permet d'augmenter le taux de détection.

De préférence encore, la valeur des variables de l'indice de performance dégradée varient respectivement sur des plages de variation dont les bornes sont définies en fonction de détections de dégradation préalablement réalisées. Ainsi, on ne teste pas des combinaisons de paramètres invraisemblables ce qui permet de limiter la durée de calcul et améliore la fiabilité de la méthode.

De préférence toujours, chaque paramètre de santé d'un module fonctionnel étant associé à une composante de vieillissement qui dépend du paramètre de vieillissement, chaque indice de performance dégradée est fonction des composantes de vieillissement de l'ensemble des modules. Ainsi, bien que l'on suppose qu'un unique module soit défaillant dans la turbomachine, on tient néanmoins compte du vieillissement de chaque module ce qui permet d'obtenir des indices de coûts plus pertinents pour améliorer la fiabilité de la décision.

Avantageusement, on compare une signature courante de la turbomachine à une bibliothèque ou base de données de signatures et le cas échéant on détermine par une fonction mathématique la ou les anomalies de la turbomachine. La bibliothèque est à renseigner avec un retour d'expériences, comme cela sera expliqué plus en détail dans ce qui suit. Cela permet de renseigner la bibliothèque avec de nouveaux scénarios qui interviennent au cours de la vie des turbomachines d'une même flotte.

## PRESENTATION DES FIGURES

L'invention sera mieux comprise à la lecture de la description qui va suivre, donnée uniquement à titre d'exemple, et se référant aux dessins annexés sur lesquels :

- la figure 1 est une représentation schématique des modules du turboréacteur et de l'étape de mesure de paramètres physiques du turboréacteur pour calculer un indice de performance courant du turboréacteur au cours de son vol;

- la figure 2 représente le suivi des indices de coût J2, J3, J4 et |J4-J2| qui sont caractéristiques de dégradations des modules M2, M3 et M4,
- la figure 3 est un diagramme schématique de la méthode de détection selon l'invention,
- la figure 4 représente un graphe montrant une signature courante d'une turbomachine, et
- la figure 5 représente des graphes d'une bibliothèque de signatures de turbomachines.

## DESCRIPTION D'UN OU PLUSIEURS MODES DE REALISATION ET DE MISE EN OEUVRE

L'invention va être présentée pour un turboréacteur d'un aéronef mais l'invention s'applique à tout type de turbomachine tel qu'une turbomachine de production d'électricité.

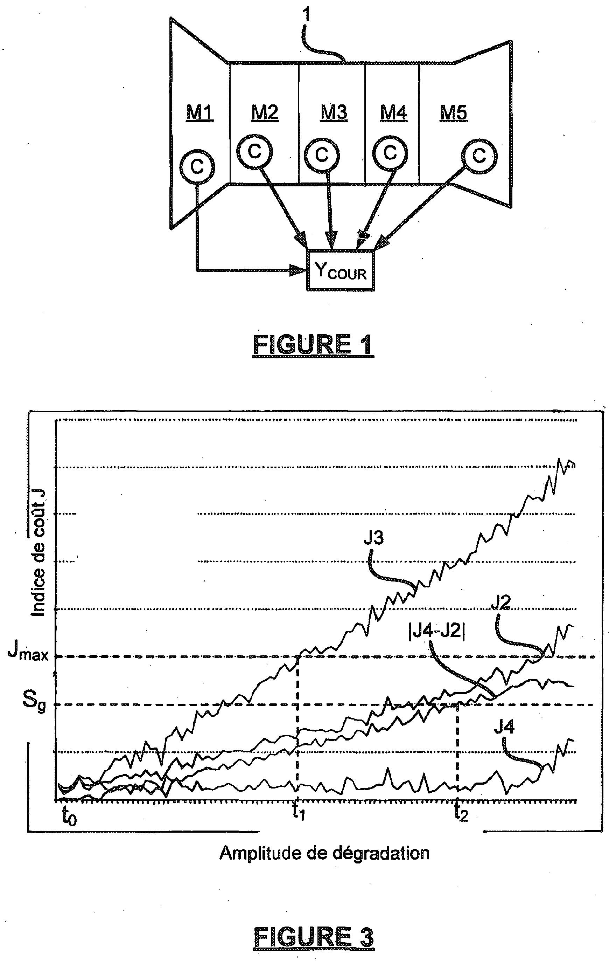

En référence à la figure 1, un turboréacteur 1 pour aéronef comporte de manière classique une pluralité de modules M tels qu'un module de soufflante M1, un module de compresseur haute pression M2, un module de booster M3, un module de turbine haute pression M4 et un module de turbine basse pression M5. Par la suite, il est supposé que le turboréacteur 1 comporte uniquement les 5 modules M1-M5 précédemment cités mais il va de soi que l'invention s'applique à un turboréacteur 1 comportant plus de 5 modules.

Indice de performance du turboréacteur

Pour permettre de suivre les performances d'un turboréacteur au cours de sa vie, on définit un indice de performance Y.

Cet indice de performance Y est classiquement obtenu par calcul à partir de quelques mesures de paramètres physiques du turboréacteur 1 au cours de ses vols. A titre d'exemple, le turboréacteur comporte une pluralité de capteurs C disposés dans le turboréacteur 1 pour mesurer des paramètres physiques tels que la température, la pression, le débit de carburant et les régimes de rotation.

L'indice de performance Y peut également être obtenu de manière analytique au moyen d'un modèle thermodynamique du turboréacteur qui est fonction de :

- paramètres globaux du turboréacteur 1 (conditions de vol, consignes de fonctionnement) et de
- paramètres de santé qui sont propres aux modules M1-M5 du turboréacteur 1.

De préférence, le modèle thermodynamique du turboréacteur 1 se présente sous la forme d'une brochure de moteur. La brochure, plus connue sous sa dénomination anglaise « performance deck » ou « engine cycle deck », définit le cycle thermodynamique complet du turboréacteur et définit de manière précise chaque composant du turboréacteur. Cette brochure, bien connue de l'homme du métier, permet aux motoristes de tester le turboréacteur 1 au cours de sa conception avant la construction d'un prototype. La brochure est propre à chaque turboréacteur d'une même famille et d'un même type. Une brochure est classiquement rédigée suivant les normes SAE Aerospace ARP755A et AS681 G.

Dans cet exemple, les paramètres de santé de chaque module M sont au nombre de deux :

- un indicateur de dégradation de rendement SE et
- un indicateur de dégradation de capacité de débit/perméabilité SW.

Contrairement aux paramètres globaux, les paramètres de santé des modules M ne sont pas déterminables. Il va de soi qu'un module M pourrait comprendre un unique paramètre de santé ou plus de deux paramètres de santé.

Dans l'exemple présent, l'indice de performance Y du turboréacteur 1 dépend de 10 paramètres de santé (2 par module) qui sont listés dans le tableau ci-dessous.

**Tableau 1 : Paramètres de santé de l'indice de performance Y sans vieillissement**

| M1 | M2 | M3 | M4 | M5 |
|-----|-----|-----|-----|-----|
| SE1 | SE2 | SE3 | SE4 | SE5 |
| SW1 | SW2 | SW3 | SW4 | SW5 |

Une telle définition de l'indice de performance Y ne prend pas en compte le vieillissement du turboréacteur 1. Au cours de la vie d'un turboréacteur 1, ses performances vont diminuer ce qui se traduit, au niveau global, par une modification au cours du temps de son indice de performance Y et, au niveau modulaire, par une modification au cours du temps des paramètres de santé SE, SW.

4

A cet effet, on décompose les paramètres de santé SE, SW en une composante de vieillissement $F_{SE}$ ($\lambda$), $F_{SW}(\lambda)$ et une composante d'anormalité $\Delta$SE, $\Delta$SW.

Autrement dit, pour chaque module fonctionnel M du turboréacteur 1, les paramètres de santé SE, SW sont définis comme suit :

$$SE = F_{SE}(\lambda) + \Delta SE$$

$$SW = F_{SW}(\lambda) + \Delta SW$$

La composante de vieillissement $F_{SE}(\lambda)$, $F_{SW}(\lambda)$ est fonction d'un niveau global de vieillissement $\lambda$ qui est défini de manière globale pour le turboréacteur 1. Les fonctions de vieillissement $F_{SE}$ et $F_{SW}$ sont pour leur part connues ou déterminables au moyen de modèles de vieillissement. Ces modèles de vieillissement sont établis à partir de matrice de dégradation obtenues à partir d'essais moteur et de retour d'expérience sur l'utilisation des moteurs en exploitation. Les matrices de dégradations traduisent l'évolution des performances des modules du turboréacteur entre un état neuf et un état détérioré. Les retours de moteur en exploitation permettent de recaler l'évolution des performances des modules.

Il en résulte que pour un module fonctionnel M du turboréacteur 1, seuls les paramètres $\Delta$SE, $\Delta$SW et $\lambda$ sont inconnus. Comme $\lambda$ est un paramètre global du turboréacteur 1, l'indice de performance Y du turboréacteur 1 dépend des 11 paramètres de santé suivants :

**Tableau 2 : Paramètres de santé de l'indice de performance Y avec vieillissement**

| M1 | M2 | M3 | M4 | M5 | |
|---|---|---|---|---|---|
| $\Delta$SE1 | $\Delta$SE2 | $\Delta$SE3 | $\Delta$SE4 | $\Delta$SE5 | $\lambda$ |
| $\Delta$SW1 | $\Delta$SW2 | $\Delta$SW3 | $\Delta$SW4 | $\Delta$SW5 | |

En référence à la figure 1, grâce à l'ensemble des capteurs C disposés sur le turboréacteur 1, on peut mesurer de manière globale l'indice de performance courant $Y_{COUR}$ du turboréacteur 1 au cours de sa vie. Malheureusement, si une perte de performance est détectée, il n'est pas possible d'en connaître l'origine (vieillesse, dégradation, etc.). En effet, l'indice de performance courant $Y_{COUR}$ dépend de 11 paramètres de santé et une résolution analytique n'est, compte-tenu du manque d'instrumentation, pas possible pour déterminer la contribution de chaque paramètre à la perte de performance.

Analyse des performances d'un module du turboréacteur

La méthode de détection d'une dégradation par analyse des performances est mise en oeuvre par un calculateur dans un système de maintenance, de préférence, au sol. Certaines données sont acquises au cours du vol et stockées dans un calculateur embarqué avant d'être transmises au système de maintenance au sol.

Selon l'invention, on calcule tout d'abord un indice de performance courant $Y_{COUR}$ du turboréacteur 1 en mesurant une pluralité de paramètres physiques comme illustré à la figure 1, par exemple, la température, la pression, le débit de carburant et le régime de rotation. Ces paramètres physiques sont normalisés au préalable de sorte à s'affranchir de l'impact de la variabilité des conditions de fonctionnement et ainsi pouvoir réaliser une comparaison cohérente de l'évolution des paramètres physiques au cours du temps.

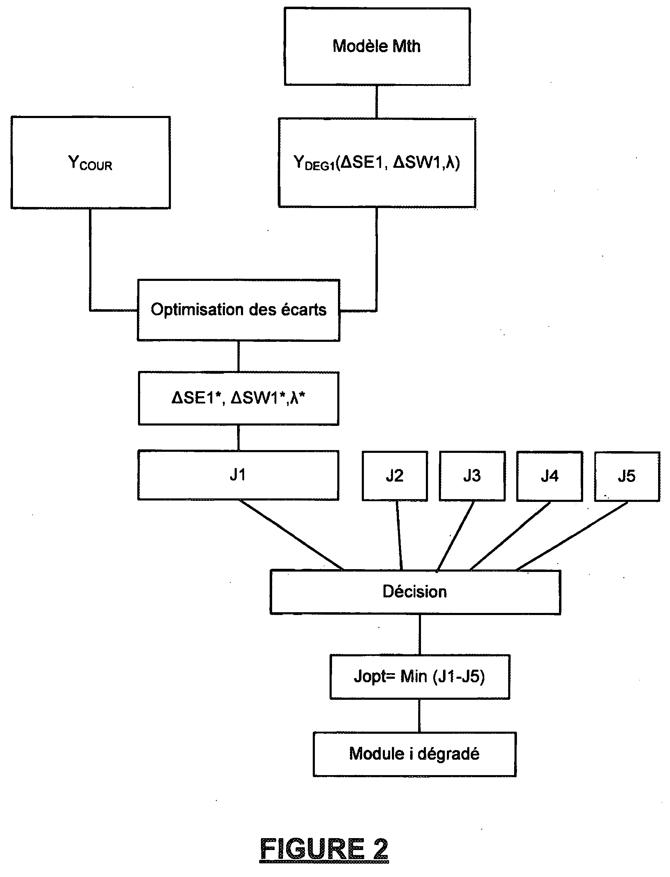

En référence à la figure 2, on calcule ensuite des indices de performance dégradée $Y_{DEG1}$-$Y_{DEG5}$ du turboréacteur 1 au moyen d'un modèle thermodynamique Mth du turboréacteur 1, tel que défini précédemment, qui dépend de paramètres globaux et de paramètres de santé qui sont propres aux modules fonctionnels M1-M5 du turboréacteur 1 et inconnus ($\Delta$SE1 - $\Delta$SE5, $\Delta$SW1- $\Delta$SW5, $\lambda$).

Chaque indice de performance dégradée $Y_{DEG1}$ - $Y_{DEG5}$ est calculé en partant de l'hypothèse qu'uniquement un seul module fonctionnel M du turboréacteur 1 est dégradé, chaque indice de performance dégradée $Y_{DEG1}$-$Y_{DEGS}$ étant associé à un module fonctionnel déterminé M1-M5. A titre d'exemple, l'indice de performance dégradée $Y_{DEG1}$ est calculé en partant de l'hypothèse que seul le module M1 du turboréacteur 1 est dégradé. Il en résulte que les paramètres de santé suivants $\Delta$SE2- $\Delta$SE5 et $\Delta$SW2-$\Delta$SW5 sont nuls du fait que les modules M2-M5 sont sains, c'est-à-dire, non-dégradés. Ainsi, en référence à la figure 2, l'indice de performance dégradée $Y_{DEG1}$ ne dépend que de trois paramètres inconnus : $\Delta$SE1, $\Delta$SW1 et $\lambda$.

Si on applique le même raisonnement pour tous les indices de performance dégradée $Y_{DEG1}$- $Y_{DEG5}$, chaque indice de performance dégradée $Y_{DEGi}$ dépend des variables ($\Delta SEi$, $ASWi$, $\lambda$) et on obtient les indices suivants :

- $Y_{DEG1}(\Delta SE1, \Delta SW1, \lambda)$ ;
- $Y_{DEG2}(\Delta SE2, \Delta SW2, \lambda)$ ;
- $Y_{DEG3}(\Delta SE3, \Delta SW3, \lambda)$ ;
- $Y_{DEG4}(\Delta SE4, \Delta SW4, \lambda)$ ; et
- $Y_{DEG5}(\Delta SE5, \Delta SW5, \lambda)$.

Chaque indice de performance dégradée $Y_{DEG1}$-$Y_{DEG5}$ est caractéristique d'un endommagement d'un unique module déterminé du turboréacteur 1.

De manière avantageuse, chaque indice de performance dégradée $Y_{DEG1}$-$Y_{DEG5}$ tient compte du vieillissement du turboréacteur 1 de chacun des modules M1-M5. Ainsi, pour l'indice de performance dégradée $Y_{DEG1}$, les paramètres de santé des modules M2-M5 tiennent compte des composante de vieillissement $F_{SE}(\lambda)$, $F_{SW}(\lambda)$.

Indice de coût

Selon l'invention, on compare chaque indice de performance dégradée $Y_{DEGi}$ à l'indice de performance courant $Y_{COUR}$. Comme l'indice de performance dégradée $Y_{DEGi}$ dépend des variables ($\Delta SEi$, $\Delta SWi$, $\lambda$), cette comparaison est paramétrique. Dans cet exemple, on optimise les paramètres de l'indice de performance dégradée $Y_{DEGi}$ afin de limiter les écarts entre les indices de performance $Y_{DEGi}$, $Y_{COUR}$.

Par la suite, l'écart minimal entre un indice de performance dégradée $Y_{DEGi}$ et l'indice de performance courant $Y_{COUR}$ est appelé indice de coût $J_i$. Cet écart minimal est obtenu pour une combinaison de paramètres optimisée $\Delta SEi^*$, $\Delta SWi^*$, $\lambda^*$ pour l'indice de performance dégradée $Y_{DEGi}$ comme illustré à la figure 2.

Cet indice de coût $J_i$, obtenu pour la combinaison de paramètres optimisée $\Delta SEi^*$, $\Delta SWi^*$, $\lambda^*$, permet d'approcher le plus l'indice de performance courant $Y_{COUR}$ lorsque l'on suppose que le module Mi est le seul dégradé. Ainsi, plus l'indice de coût $J_i$ est faible, plus la dégradation du module Mi du turboréacteur 1 est vraisemblable.

Pour calculer la valeur minimale de chaque indice de coût $J_i$, on fait varier les paramètres $\Delta SEi$, $\Delta SWi$ et $\lambda$. De préférence, les évolutions des paramètres ($\Delta SEi$, $\Delta SWi$, $\lambda$) sont mises sous contraintes. Dans cet exemple, les paramètres ($\Delta SEi$, $\Delta SWi$, $\lambda$) varient sur des plages de variation dont les bornes sont définies en fonction de détections de dégradations préalablement survenues sur le turboréacteur 1. Ainsi, un turboréacteur 1 ne peut pas « rajeunir » d'un vol à un autre ($\lambda$ est nécessairement croissant). De même, le rendement d'un module Mi ne peut pas s'améliorer avec le temps ($\Delta SEi$ est nécessairement croissant). Comme chaque indice de coût $J_i$ ne dépend que de trois paramètres inconnus ($\Delta SEi$, $\Delta SWi$, $\lambda$), il est simple de parvenir à une optimisation de manière numérique qui soit unique. En effet, plus le nombre de paramètres est important, plus le nombre de solutions possibles est important ce qui empêche une prise de décision fiable.

A titre d'exemple, l'indice de coût $J_i$ pour un module $M_i$ est calculé à partir de la formule suivante :

$$J_i = \sqrt{\frac{1}{N} \sum_k^N \left( \frac{Y_{k,i} - Y_{k,COUR}}{\sigma_k} \right)^2}$$

Formule dans laquelle :

- $Y_{k,j}$ correspond à l'indice de performance dégradée d'une dégradation d'un module i observée pour la composante du module k d'un turboréacteur comportant N modules ;
- $Y_{k,cour}$ correspond à l'indice de performance courant pour la composante du module k du turboréacteur ;
- $\sigma_k$ correspond aux incertitudes de mesures sur les différents indices de performance.

Il va de soi que d'autres fonctions de coût pourraient être utilisées pour mesurer la vraisemblance de l'hypothèse réalisée sur l'état de santé d'un module du turboréacteur.

Lors de cette approximation par les moindres carrés, on détermine pour chaque indice de coût $J_i$ une valeur du paramètre de vieillissement optimisé $\lambda^*$. Comme les paramètres de santé SE, SW des modules M1-M5 dépendent aussi d'une composante de vieillissement $F_{SE}(\lambda^*)$, $F_{SW}(\lambda^*)$ fonction de $\lambda^*$, il en résulte que l'indice de performance de chaque module sain $Y_{k,i}$ est également modifié lors du calcul de l'indice de coût $J_i$ pour un module dégradé donné Mi. Autrement dit, même si les modules Mi sont considérés sains, on tient compte de leur vieillissement pour calculer les indices de performance dégradée.

Détermination d'une dégradation d'un module

En référence à la figure 2, une fois que toutes les combinaisons ont été testées, on obtient une pluralité d'indices de coût $J_i$ qui sont chacun associés à un jeu de paramètres optimisés ($\Delta SEi^*, \Delta SWi^*, \lambda^*$). Dans cet exemple, on obtient cinq indices de coût $J_1$-$J_5$, chaque indice de coût étant représentatif de la vraisemblance de l'hypothèse réalisée sur la dégradation d'un module Mi du turboréacteur 1.

Ainsi, plus l'indice de coût $J_i$ est faible, plus la probabilité est grande que le module Mi soit un module dégradé.

Selon l'invention, en référence à la figure 2, on détecte une dégradation en sélectionnant l'indice de coût de plus faible valeur, dit indice de coût optimal $J_{opt}$. En effet, celui-ci est le plus proche de l'indice de performance courant $Y_{COUR}$ et a le plus de chance de correspondre à la dégradation observée.

Afin de limiter le risque de fausse détection, on met en oeuvre des étapes de consolidation de la décision de dégradation.

Comme représenté sur la figure 3, on suit l'évolution des trois indices de coût $J_2$-$J_4$ en fonction du niveau de dégradation du turboréacteur 1 qui est fonction du temps.

Pour limiter le risque de fausse détection, dans une première forme de mise en oeuvre de l'invention, seuls les indices de coût J inférieurs à un seuil de coût $J_{max}$ sont pris en compte pour être sélectionnés. De préférence, le seuil de coût $J_{max}$ est un seuil paramétrable qui est ici défini de manière empirique en fonction de la sensibilité souhaitée. Plus l'indice de coût J est élevé, moins la dégradation est vraisemblable. En référence à la figure 3, les indices de coût J2, J3 et J4 sont inférieurs au seuil de coût $J_{max}$ sur $t_0$-$t_1$. Tous les indices de coût J2, J3 et J4 sont donc sélectionnables pour détecter l'indice de coût optimal $J_{opt}$. Par contre, l'indice de coût J3 est supérieur au seuil de coût $J_{max}$ sur $t_1$-$t_2$ ce qui limite le choix aux seuls indices de coût J2 et J4. En limitant le nombre d'indices de coût pris en compte, on accélère la sélection de l'indice de coût optimal $J_{opt}$ ce qui est avantageux.

Dans une deuxième forme de mise en oeuvre de l'invention, on compare la valeur de l'indice de coût optimal $J_{opt}$ et la valeur de l'indice de coût candidat $J_{cand}$ correspondant à celui de plus faible valeur parmi l'ensemble des indices de coût J1-J5 outre l'indice de coût optimal $J_{opt}$. Dans cet exemple, l'indice de coût optimal $J_{opt}$ est J4 et l'indice de coût candidat $J_{cand}$ est J2. On compare la différence entre l'indice de coût candidat $J_{cand}$ et l'indice de coût optimal $J_{opt}$ à un seuil de garde de valeur déterminée $S_g$ et on retourne les deux meilleurs indices si la différence est inférieure au seuil de garde $S_g$. En effet, on estime que la discrimination n'est pas suffisamment fiable pour déterminer avec certitude le module à l'origine de la dégradation observée. On limite ainsi le risque de fausse détection.

En référence à la figure 3, la différence |J4-J2| est représentée et comparée au seuil de garde $S_g$. Sur l'intervalle $t_0$-$t_2$, la différence |J4-J2| est inférieure au seuil de garde $S_g$ et les deux solutions M2 et M4 sont retournées. En effet, comme illustré à la figure 3, les valeurs J2 et J4 sont très proches l'une de l'autre sur l'intervalle $t_0$-$t_2$ et il est difficile de prendre une décision quant à l'origine exacte de la dégradation observée. A partir de l'instant $t_2$, l'écart |J2-J4| excède le seuil de garde $S_g$ et une décision fiable peut être prise pour déclarer une dégradation du module M4.

Quand une décision est prise sur un ou deux modules endommagés, des opérations de maintenance peuvent être mises en oeuvre sur ces modules de manière localisée avant qu'une dégradation majeure du turboréacteur 1 ne survienne. Cette méthode permet de limiter les opérations de maintenance aux seul modules concernés ce qui permet de réaliser des économies et de limiter le temps de maintenance. En outre, la réparation est anticipée ce qui permet aux compagnies aériennes de disposer de manière continue d'appareils opérationnels.

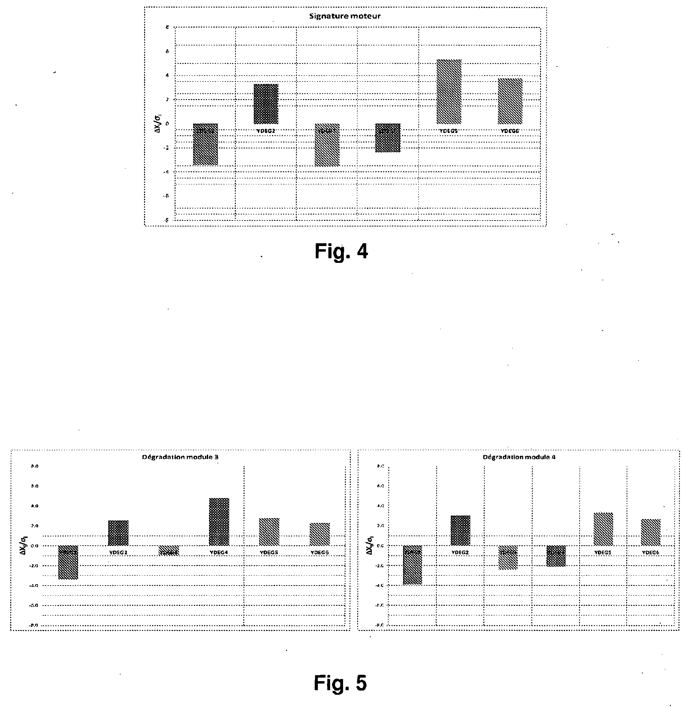

Les figures 4 et 5 représentent une étape avantageuse de la méthode selon l'invention, dans laquelle on compare une signature courante de la turbomachine à une bibliothèque de signatures et le cas échéant on détermine par une fonction mathématique une ou des anomalies de la turbomachine. La figure 4 représente un exemple d'une signature courante d'une turbomachine. Cette signature est obtenue en mesurant des paramètres ou indicateurs physiques de la turbomachine. La figure 5 représente un exemple d'une bibliothèque de signatures, le premier graphe étant une signature obtenue lorsqu'une dégradation du rendement du module M3 affecte la turbomachine, et le second graphe étant une signature obtenue lorsqu'une dégradation du rendement du module M4 intervient. Une fonction mathématique appropriée de classification permet à partir de la bibliothèque de signatures (combinaison d'indicateurs) d'identifier au moins une anomalie de la turbomachine, à partir de sa signature courante. Les signatures sont comparées en termes de colinéarité (forme/sens de variation des indicateurs) et amplitudes. La combinaison de ces éléments donne une probabilité. La bibliothèque de signatures est à renseigner avec le retour d'expériences (événements rencontrés en opération) d'une flotte de turbomachines. Dans l'exemple représenté, la signature de la figure 4 est comparée à celles de la figure 5 et la fonction donne une probabilité de 97% pour le module M3 contre 52% pour le module M4. Cela signifie que la turbomachine a une signature indiquant que son module M3 présente une dégradation de son rendement.

**Revendications**

1.  Méthode de détection d'une dégradation d'une turbomachine (1), au moyen d'un calculateur, par surveillance des performances de ladite turbomachine (1), la turbomachine comportant une pluralité de modules fonctionnels (M1-M5), chaque module fonctionnel (M1-M5) étant **caractérisé par** au moins un paramètre de santé ($\Delta$SE1-$\Delta$SE5, $\Delta$SW1-$\Delta$SW5) représentatif d'une dégradation du module fonctionnel (M1-M5) de la turbomachine (1), le vieillissement global de la turbomachine (1) étant **caractérisé par** un paramètre de vieillissement ($\lambda$), méthode dans laquelle :

- on mesure une pluralité de paramètres physiques de la turbomachine (1) pour former un indice de performance courant ($Y_{COUR}$) de la turbomachine (1) ;
- on calcule une pluralité d'indices de performance dégradée ($Y_{DEG1}$-$Y_{DEG5}$) de la turbomachine (1) au moyen d'un modèle thermodynamique de la turbomachine en supposant pour chaque indice de performance dégradée ($Y_{DEG}$) qu'uniquement un seul module fonctionnel (M) de la turbomachine (1) est dégradé, chaque indice de performance dégradée ($Y_{DEG1}$-$Y_{DEG5}$) étant associé à un module fonctionnel (M1-M5) ;
- chaque indice de performance dégradée ($Y_{DEG}$), correspondant à un unique module fonctionnel (M) dégradé parmi l'ensemble des modules fonctionnels (M1-M5) de la turbomachine (1), est obtenu par simulation d'un indice de performance de la turbomachine (1) pour lequel le paramètre de santé ($\Delta$SE, $\Delta$SW) du module fonctionnel dégradé (M) et le paramètre de vieillissement ($\lambda$) sont des variables, les paramètres de santé des autres modules fonctionnels non dégradés étant estimés comme des paramètres de santé sains ;
- on calcule une pluralité d'indices de coût (J), chaque indice de coût (J) correspondant à l'écart entre l'indice de performance courant ($Y_{COUR}$) et chaque indice de performance dégradée ($Y_{DEG1}$-$Y_{DEG5}$) en faisant varier les variables ($\Delta$SE, $\Delta$SW, $\lambda$) de l'indice de performance dégradée ($Y_{DEG1}$-$Y_{DEG5}$) de manière à ce que l'écart soit minimal, chaque indice de performance dégradée ($Y_{DEG1}$-$Y_{DEG5}$) étant associé à son indice de coût (J1-J5) ;
- on détermine l'indice de coût optimal ($J_{opt}$) correspondant à celui de plus faible valeur parmi l'ensemble des indices de coût (J1-J5) ;
- on détecte une dégradation du module de la turbomachine dont l'indice de performance dégradée est associé à l'indice de coût optimal ($J_{opt}$).

2. Méthode selon la revendication 1, dans laquelle chaque module fonctionnel (M1-M5) est **caractérisé par** au moins deux paramètres de santé ($\Delta$SE1-$\Delta$SE5, $\Delta$SW1-$\Delta$SW5).

3. Méthode selon la revendication 2, dans laquelle chaque module fonctionnel (M1-M5) est **caractérisé par** :

- un indicateur de dégradation de rendement ($\Delta$SE1-$\Delta$SE5) et
- un indicateur de dégradation de capacité de débit/perméabilité ($\Delta$SW1-$\Delta$SW5).

4. Méthode selon l'une des revendications 1 à 3, dans laquelle, les modules fonctionnels (M1-M5) appartiennent aux modules fonctionnels suivants: un module de soufflante (M1), un module de compresseur haute pression (M2), un module de booster (M3), un module de turbine haute pression (M4) et un module de turbine basse pression (M5).

5. Méthode selon l'une des revendications 1 à 4, dans laquelle :

- on compare l'indice de coût optimal ($J_{opt}$) à un seuil de coût (Jmax) de valeur prédéterminée et
- on inhibe la détection de la dégradation si l'indice de coût optimal ($J_{opt}$) est inférieur au seuil de coût (Jmax).

6. Méthode selon l'une des revendications 1 à 5, dans laquelle :

- on détermine un indice de coût candidat ($J_{cand}$) correspondant à celui de plus faible valeur parmi l'ensemble des indices de coût (J1-J5) outre l'indice de coût optimal ($J_{opt}$),
- on compare la différence entre l'indice de coût candidat ($J_{cand}$) et l'indice de coût optimal ($J_{opt}$) à un seuil de garde déterminé ($S_g$) ; et
- on détecte une dégradation du module de la turbomachine dont l'indice de performance dégradée est associé à l'indice de coût candidat ($J_{cand}$) si la différence est inférieure au seuil de garde déterminé ($S_g$).

7. Méthode selon l'une des revendications 1 à 6, dans laquelle la valeur des variables ($\Delta$SEi, $\Delta$SWi,$\lambda$) de l'indice de performance dégradée ($Y_{DEG1}$-$Y_{DEG5}$) varient respectivement sur des plages de variation dont les bornes sont définies en fonction de détections de dégradation préalablement réalisées.

8. Méthode selon l'une des revendications 1 à 7, dans laquelle, chaque paramètre de santé ($\Delta$SE1-$\Delta$SE5, $\Delta$SW1-$\Delta$SW5) d'un module fonctionnel (M1-M5) étant associé à une composante de vieillissement ($F_{SE}$ ($\lambda$), $F_{SW}$ ($\lambda$)) qui dépend du paramètre de vieillissement ($\lambda$), chaque indice de performance dégradée ($Y_{DEG}$) est fonction des composantes de vieillissement ($F_{SE}$ ($\lambda$), $F_{SW}$ ($\lambda$)) de l'ensemble des modules (M1-M5).

9. Méthode selon l'une des revendications 1 à 8, dans laquelle on compare une signature courante de la turbomachine à une bibliothèque de signatures et le cas échéant on détermine par une fonction mathématique la ou les anomalies de la turbomachine.

**Patentansprüche**

1. Verfahren zur Detektion einer Verschlechterung einer Turbomaschine (1) mittels eines Rechners durch Überwachung der Leistungsdaten der Turbomaschine (1), wobei die Turbomaschine eine Mehrzahl von funktionalen Modulen (M1-M5) aufweist, wobei jedes funktionale Modul (M1-M5) durch wenigstens einen Gesundheitsparameter ($\Delta$SE1-$\Delta$SE5, $\Delta$SW1-$\Delta$SW5) gekennzeichnet ist, welcher für eine Verschlechterung des funktionalen Moduls (M1-M5) der Turbomaschine (1) repräsentativ ist, wobei die allgemeine Alterung der Turbomaschine (1) durch einen Alterungsparameter ($\lambda$) gekennzeichnet ist, bei dem Verfahren:

   - misst man eine Mehrzahl von physischen Parametern der Turbomaschine (1), um einen Index ($Y_{COUR}$) für eine momentane Leistung der Turbomaschine (1) zu bilden;
   - man berechnet eine Mehrzahl von Indices ($Y_{DEG1}$-$Y_{DEG5}$) für eine verschlechterte Leistung der Turbomaschine (1) mittels eines thermodynamischen Modells der Turbomaschine, unter der Annahme, dass für jeden Index ($Y_{DEG}$) für eine verschlechterte Leistung allein ein einziges funktionales Modul (M) der Turbomaschine (1) verschlechtert ist, wobei jeder Index ($Y_{DEG1}$-$Y_{DEG5}$) für eine verschlechterte Leistung einem funktionalen Modul (M1-M5) zugeordnet ist;
   - jeder Index ($Y_{DEG}$) für eine verschlechterte Leistung, welcher einem einzigen verschlechterten funktionalen Modul (M) aus der Gesamtheit der funktionalen Module (M1-M5) der Turbomaschine (1) entspricht, wird erhalten durch Simulation eines Leistungsindexes der Turbomaschine (1), für den der Gesundheitsparameter ($\Delta$SE, $\Delta$SW) des verschlechterten funktionalen Moduls (M) und der Alterungsparameter ($\lambda$) Variablen sind, wobei die Gesundheitsparameter der anderen nicht verschlechterten funktionalen Module als gesunde Gesundheitsparameter geschätzt werden;
   - man berechnet eine Mehrzahl von Kostenindices (J), wobei jeder Kostenindex (J) der Abweichung zwischen dem Index ($Y_{COUR}$) für eine momentane Leistung und jedem Index für eine verschlechterte Leistung entspricht, indem die Variablen ($\Delta$SE, ASW, $\lambda$) des Index für eine verschlechterte Leistung ($Y_{DEG1}$-$Y_{DEG5}$) in der Weise variiert werden, dass die Abweichung minimal wird, wobei jeder Index ($Y_{DEG1}$-$Y_{DEG5}$) für eine verschlechterte Leistung seinem Kostenindex (J1-J5) zugeordnet ist;
   - man bestimmt den optimalen Kostenindex ($J_{opt}$), welcher dem niedrigsten Wert aus der Gesamtheit der Kostenindices (J1-J5) entspricht;
   - man detektiert eine Verschlechterung des Moduls der Turbomaschine, dessen Index für eine verschlechterte Leistung dem optimalen Kostenindex ($J_{opt}$) zugeordnet ist.

2. Verfahren nach Anspruch 1, bei dem jedes funktionale Modul (M1-M5) durch wenigstens zwei Gesundheitsparameter ($\Delta$SE1-$\Delta$SE5, $\Delta$SW1-$\Delta$SW5) charakterisiert ist.

3. Verfahren nach Anspruch 2, bei dem jedes funktionale Modul (M1-M5) charakterisiert ist durch:

   - einen Kennwert für die Verschlechterung der Leistung ($\Delta$SE1-$\Delta$SE5) und
   - einen Kennwert für die Verschlechterung des Durchflussstromes/ der Durchlässigkeit ($\Delta$SW1-$\Delta$SW5).

4. Verfahren nach einem der Ansprüche 1 bis 3, bei dem die funktionalen Module (M1-M5) zu folgenden funktionalen Modulen gehören: einem Bläsermodul (M1), einem Hochdruckverdichtermodul (M2), einem Brennkammermodul (M3), einem Hochdruckturbinenmodul (M4) und einem Niederdruckturbinenmodul (M5).

5. Verfahren nach einem der Ansprüche 1 bis 4, bei dem:

   - man den Index der optimalen Kosten ($J_{opt}$) mit einem vorgegebenen Kostenschwellenwert (Jmax) vergleicht und
   - man die Detektion einer Verschlechterung verhindert, wenn der Index der optimalen Kosten ($J_{opt}$) kleiner ist als der Kostenschwellenwert (Jmax).

6. Verfahren nach einem der Ansprüche 1 bis 5, bei dem:

- man einen Index für einen Kostenkandidaten ($J_{cand}$) feststellt, welcher dem niedrigsten Wert aus der Gesamtheit der Kostenindices (J1-J5) außer dem Index der optimalen Kosten ($J_{opt}$) entspricht,
- man die Differenz zwischen dem Index für einen Kostenkandidaten ($J_{cand}$) und dem Index der optimalen Kosten ($J_{opt}$) mit einem bestimmten Sicherheitsschwellenwert (Sg) vergleicht; und
- man eine Verschlechterung des Moduls der Turbomaschine feststellt, dessen Index einer verschlechterten Leistung dem Index für einen Kostenkandidaten ($J_{cand}$) zugeordnet ist, wenn die Differenz kleiner ist als der vorbestimmte Sicherheitsschwellenwert ($S_g$).

7. Verfahren nach einem der Ansprüche 1 bis 6, bei dem der Wert der Variablen ($\Delta SEi$, $\Delta SWi$, $\lambda$) des Index einer verschlechterten Leistung ($Y_{DEG1}$-$Y_{DEG5}$) jeweils in den Variationsbereichen variieren, deren Grenzen abhängig von Detektionen von Verschlechterungen definiert sind, die zuvor eingetreten sind.

8. Verfahren nach einem der Ansprüche 1 bis 7, bei dem jeder Gesundheitsparameter ($\Delta SE1$-$\Delta SE5$, $\Delta SW1$-$\Delta SW5$) eines funktionalen Moduls (M1-M5) einer Alterungskomponente ($F_{SE}(\lambda)$, $F_{SW}(\lambda)$) zugeordnet ist, die von dem Alterungsparameter ($\lambda$) abhängt, wobei jeder Index einer verschlechterten Leistung ($Y_{DEG}$) eine Funktion der Alterungskomponenten ($F_{SE}(\lambda)$, $F_{SW}(\lambda)$) der Gesamtheit der Module (M1-M5) ist.

9. Verfahren nach einem der Ansprüche 1 bis 8, bei dem man eine momentane Signatur der Turbomaschine mit einer Bibliothek von Signaturen vergleicht und gegebenenfalls stellt man durch eine mathematische Funktion die Anomalie(n) der Turbomaschine fest.

**Claims**

1. Method for detecting degradation of a turbine engine (1), by means of a computer, by monitoring the performance of said turbine engine (1), the turbine engine comprising a plurality of functional modules (M1-M5), each functional module (M1-M5) being **characterised by** at least one health parameter ($\Delta SE1$- $\Delta SE5$, $\Delta SW1$- $\Delta SW5$) representing degradation of the functional module (M1-M5) of the turbine engine (1), the global aging of the turbine engine (1) being **characterised by** an aging parameter ($\lambda$), in which method:

- a plurality of physical parameters of the turbine engine (1) are measured in order to form a current performance index ($Y_{COUR}$) of the turbine engine (1);
- a plurality of degraded performance indices ($Y_{DEG1}$ - $Y_{DEG5}$) of the turbine engine (1) are calculated by means of a thermodynamic model of the turbine engine, assuming for each degraded performance index ($Y_{DEG}$) that only one functional module (M) of the turbine engine (1) has degraded, each degraded performance index ($Y_{DEG1}$ - $Y_{DEG5}$) being associated with a functional module (M1-M5);
- each degraded performance index ($Y_{DEG}$), corresponding to a single degraded functional module (M) among all the functional modules (M1-M5) of the turbine engine (1), is obtained by simulating a performance index of the turbine engine (1) for which the health parameter ($\Delta SE$, $\Delta SW$) of the degraded functional module (M) and the aging parameter ($\lambda$) are variables, the health parameters of the other, non-degraded functional modules being considered to be healthy health parameters;
- a plurality of cost indices (J) are calculated, each cost index (J) corresponding to the difference between the current performance index ($Y_{COUR}$) and each degraded performance index ($Y_{DEG1}$ - $Y_{DEG5}$), varying the variables ($\Delta SE$, $\Delta SW$, $\lambda$) of the degraded performance index ($Y_{DEG1}$ - $Y_{DEG5}$) so that the difference is minimal, each degraded performance index ($Y_{DEG1}$-$YD_{EG5}$) being associated with its cost index (J1-J5);
- the optimum cost index ($J_{opt}$) corresponding to the one with the lowest value among all the cost indices (J1-J5) is determined;
- degradation of the module of the turbine engine, the degraded performance index of which is associated with the optimum cost index ($J_{opt}$), is detected.

2. Method according to claim 1, in which each functional module (M1-M5) is **characterised by** at least two health parameters ($\Delta SE1$- $\Delta SE5$, $\Delta SW1$- $\Delta SW5$).

3. Method according to claim 2, in which each functional module (M1-M5) is **characterised by**:

- an efficiency degradation indicator ($\Delta SE1$ - $\Delta SE5$) and

- a permeability/flow rate capacity degradation indicator ($\Delta$SW1 - $\Delta$SW5).

4. Method according to any of claims 1 to 3, wherein the functional modules (M1-M5) belong to the following functional modules: a fan module (M1), a high-pressure compressor module (M2), a booster module (M3), a high-pressure turbine module (M4) and a low-pressure turbine module (M5).

5. Method according to any of claims 1 to 4, wherein:

- the optimum cost index ($J_{opt}$) is compared with a cost threshold ($J_{max}$) having a predetermined value, and
- the detection of the degradation is inhibited if the optimum cost index ($J_{opt}$) is below the cost threshold ($J_{max'}$).

6. Method according to any of claims 1 to 5, wherein:

- a candidate cost index ($J_{cand}$) is determined, said candidate cost index ($J_{cand}$) corresponding to the one having the lowest value among all the cost indices (J1-J5) apart from the optimum cost index ($J_{opt}$),
- the difference between the candidate cost index ($J_{cand}$) and the optimum cost index ($J_{opt}$) is compared with a given guard threshold ($S_g$); and
- degradation of the module of the turbine engine is detected if said difference is below the given guard threshold ($S_g$), the degraded performance index of said turbine engine being associated with the candidate cost index ($J_{cand}$).

7. Method according to any of claims 1 to 6, wherein the value of the variables ($\Delta$SEi, $\Delta$SWi, $\lambda$) of the degraded performance index ($Y_{DEG1}$ - $Y_{DEG5}$) varies respectively over variation ranges the bounds of which are determined according to degradation detections previously made.

8. Method according to any of claims 1 to 7, wherein, since each health parameter ($\Delta$SE1-$\Delta$SE5, $\Delta$SW1- $\Delta$SW5) of a functional module (M1-M5) is associated with an aging component ($F_{SE}(\lambda)$,$F_{SW}(\lambda)$) that is dependent on the aging parameter ($\lambda$), each degraded performance index ($Y_{DEG}$) is a function of the aging components ($F_{SE}(\lambda)$,$F_{SW}(\lambda)$) of all the modules (M1-M5).

9. Method according to any of claims 1 to 8, wherein a current signature of the turbine engine is compared with a library of signatures and where applicable any abnormality or abnormalities in the turbine engine are determined by means of a mathematical function.

**FIGURE 1**

Amplitude de dégradation

**FIGURE 3**

**FIGURE 2**

## Fig. 4

## Fig. 5

**EP 2 872 956 B1**

**RÉFÉRENCES CITÉES DANS LA DESCRIPTION**

**Documents brevets cités dans la description**

- EP 2207072 A2
- FR 1151348